# FASCICULE DE BREVET EUROPEEN

(11) **EP 3 953 605 B1**
(45) Date de publication et mention de la délivrance du brevet: **07.06.2023**
(21) Numéro de dépôt: 20722477.5
(22) Date de dépôt: 08.04.2020
(51) Int. Cl.: F16F 9/56, F16F 9/02

(54) **PIÈCE DE GUIDAGE ET DE BLOCAGE DE VÉRIN ET VÉRIN LA COMPORTANT**
TEIL ZUR FÜHRUNG UND VERRIEGELUNG EINES AKTUATORS UND AKTUATOR DAMIT
PIECE FOR GUIDING AND LOCKING AN ACTUATOR AND ACTUATOR COMPRISING SAME

(30) Priorité: 08.04.2019 FR 1903729
(43) Date de publication de la demande: 16.02.2022
(73) Titulaire: BS Outdoor, 30100 Ales (FR)
(72) Inventeur: JUBERT, Thibaut, 30520 SAINT MARTIN DE VALGALGUE (FR)
(74) Mandataire: Cornuejols, Georges
(86) Numéro de dépôt international: PCT/EP2020/060097
(87) Numéro de publication internationale: WO 2020/208112

(56) Documents cités:
- WO-A1-2014/071270
- DE-U1- 9 308 253
- FR-A1- 3 094 763
- JP-A- H11 201 210
- US-A- 4 925 230
- US-A- 4 938 520
- US-A- 5 024 303
- US-A1- 2001 002 739
- US-A1- 2002 050 003
- US-A1- 2008 315 475
- US-A1- 2009 096 140

## Description

### DOMAINE TECHNIQUE DE L'INVENTION

La présente invention vise une pièce de guidage et de blocage de vérin et un vérin la comportant. Elle s'applique, en particulier, aux domaines des portes, coffres, coffres à bagages, coffres de toit, capot, hayon, tentes, etc., comportant des vérins à gaz.

### ÉTAT DE LA TECHNIQUE

Le vérin à gaz, plus correctement appelé ressort à gaz, est un tube étanche contenant un gaz comprimé ou un ressort hélicoïdal dans lequel se déplace un piston relié à l'extérieur par une tige. Ces vérins contiennent une petite quantité de lubrifiant pour le bon fonctionnement de la tige.

Selon l'utilisation et l'effort nécessaire à fournir, les vérins sont plus ou moins tarés pour servir de contrepoids pour l'ouverture ou la fermeture de portes, de coffres à bagages, de capots moteurs, de hayons, etc.

Cependant, en configuration détendue, la force que ces vérins peuvent retenir est limitée par la pression du gaz à l'intérieur du vérin. Si bien qu'en cas de rafale de vent, par exemple, la porte, le hayon, le capot ou la tente peuvent se déplacer en comprimant le vérin. Il s'ensuit un inconfort, voire un danger pour l'utilisateur.

On connaît un système de blocage de vérin dans le document JP-411201210. Ce système, illustré en figures 8 et 9 de la présente demande de brevet, comporte une pièce 9 (voir figure 9) solidaire d'un piston 1 et munie d'un évidement 9E formant épaulement. Pour bloquer le vérin, le tube 9 est désaxé, par rapport à l'axe du piston 1 pour qu'une partie de sa paroi inférieure 6 vienne en appui sur l'épaulement 9E.

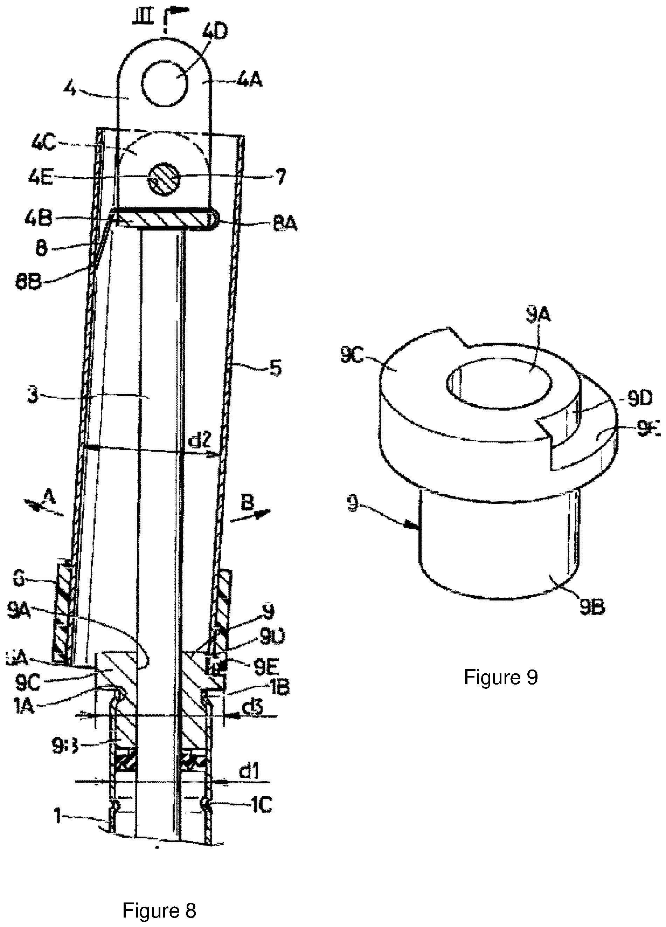

Ce système présente de nombreux inconvénients. D'une part, le moindre choc (dans le sens illustré par la flèche B en figure 8) sur la partie du tube 5 opposée (à gauche en figure 8) à l'épaulement 9E (à droite en figure 8) provoque le déblocage du vérin par sortie de la paroi 6 de l'épaulement 9E et peut mettre en danger un utilisateur. D'autre part, la pièce particulière 9 est solidaire du piston 1, ce qui implique que ce système n'est pas adaptable à un vérin préexistant quelconque. De plus, pour faciliter la mise en butée de la paroi 6 dans l'épaulement 9E, un ressort 8 est nécessaire dans le tube 5, ce qui complique encore la fabrication, donc le coût du vérin et en réduit la durée de vie par usure ou corrosion du ressort 8 et usure interne du tube 5 qui est toujours mis en frottement contre le piston 1. Lorsque le vérin est bloqué, la force exercée par le tube 5 sur le piston 1 passe intégralement par la pièce 9, ce qui la fragilise et risque de la désaxer. De plus, cette force est asymétrique sur le piston 1, entièrement à droite dans la figure 8. Ce qui augmente les risques de flambage du vérin.

On connaît la demande de brevet américain US 2009/096140 qui divulgue un vérin à gaz qui comporte une pièce de blocage.

### EXPOSE DE L'INVENTION

La présente invention vise à remédier à tout ou partie de ces inconvénients.

À cet effet, selon un premier aspect, la présente invention vise une pièce de guidage et de blocage d'un vérin à gaz et/ou à ressort prédéterminé comportant un piston et un tube comportant un évidement axial dans lequel le piston peut coulisser, pièce qui comporte, dans un corps :
- un logement d'accueil du tube configuré pour recevoir, en son intérieur, une extrémité du tube du vérin en coulissement libre pour sortir du logement,
- un logement d'accueil du piston, coaxial avec le logement du tube et dans le prolongement du logement du tube, configuré pour recevoir, en son intérieur, le piston en translation libre le long de l'axe commun aux logements, et
- du côté du logement d'accueil du tube, par rapport à un plan perpendiculaire à l'axe des logements et passant par le fond du logement d'accueil du tube, une excroissance s'étendant au-delà du logement d'accueil de tube, configurée pour pénétrer à l'intérieur du tube.

Grâce à ces dispositions, lorsque les logements reçoivent le tube et le piston, la pièce assure le guidage du piston dans le tube, notamment pour limiter les risques de flambage du piston. En revanche, à partir de la configuration d'utilisation du vérin, dans laquelle le logement de tube loge une extrémité du tube, en faisant coulisser la pièce pour faire sortir le tube de son logement, puis en décalant cette pièce perpendiculairement à l'axes commun aux logements, on positionne l'excroissance en regard de l'intérieur du tube. Puis par coulissement parallèle à l'axe commun aux logements, on fait pénétrer cette excroissance dans le tube, ce qui a pour effet de bloquer le piston, décaler par rapport à l'axe du tube, sur l'extrémité du tube.

On observe que la pièce de guidage et de blocage objet de l'invention peut s'adapter à tout vérin préexistant dont on connaît les dimensions intérieur et extérieur du tube et les dimensions extérieures du piston et, éventuellement, extérieures d'une tige interne au piston. Pour les vérins les plus utilisés, dont les tubes et pistons et éventuelle tige interne au piston, sont cylindriques à directrices circulaires, la connaissance des diamètres intérieur et extérieur du tube et du diamètre extérieur du piston et, éventuellement, extérieures d'une tige interne au piston, suffisent à la détermination des dimensions de la pièce objet de l'invention.

Cette pièce présente d'autres avantages. D'une part, un choc latéral ne provoque le déblocage du vérin puisque l'excroissance reste partiellement à l'intérieur du tube. Ce qui assure une meilleure sécurité de l'utilisateur. D'autre part, aucune pièce additionnelle n'est nécessaire pour transformer un vérin de l'art antérieur en un vérin permettant un blocage. Lorsque le vérin est bloqué, la force exercée par le tube sur le piston ne passe pas par la pièce de blocage, qui ne réalise que le décalage latéral des axes du tube et du piston. De plus, cette force est sensiblement symétrique sur le bord du tube, ce qui réduit les risques de flambage du vérin.

Dans des modes de réalisation, l'excroissance présente une section perpendiculaire à l'axe des logements, qui s'inscrit, au sens géométrique, dans l'évidement axial du tube du vérin.

Pour bloquer le vérin en position déployée, on fait sortir le tube de son logement dans la pièce et on introduit l'excroissance dans l'évidement axial du tube jusqu'à la section inscrite dans cet évidement axial. L'axe du piston est alors décalé par rapport à l'axe du tube et prend appui sur la paroi du tube. Dans cette configuration, le vérin ne peut pas se rétracter, même sous l'effet d'une force exercée sur le piston en direction du tube. Le confort et la sécurité de l'utilisateur s'en trouvent augmentés.

Dans des modes de réalisation, le vérin comportant une tige en appui sur un ressort positionné dans le piston, l'excroissance est configurée pour pénétrer dans le tube à côté de la tige.

Dans des modes de réalisation, l'excroissance est configurée pour, une fois qu'elle pénètre dans le tube, décaler l'axe du tube par rapport à l'axe de la tige et par rapport à l'axe du piston.

Le bord de l'extrémité du piston prend ainsi appui sur le bord de l'extrémité du tube.

Dans des modes de réalisation, l'excroissance est configurée pour, une fois qu'elle pénètre dans le tube, décaler l'axe de la tige par rapport à l'axe du piston.

Dans des modes de réalisation, l'excroissance est configurée pour que, une fois l'excroissance pénétrant dans le tube, l'excroissance prend, à la fois, appui sur le bord interne de l'évidement axial et sur la tige.

Dans des modes de réalisation, l'excroissance est configurée pour que, une fois l'excroissance pénétrant dans le tube, la tige soit en appui sur le bord interne du tube et sur le bord intérieur du piston.

Grâce à chacune de ces dispositions, les mouvements relatifs du piston et du tube, perpendiculairement à leurs axes, sont limités, ce qui réduit l'usure de ces éléments, les jeux du vérin et les risques de flambage du vérin.

Dans des modes de réalisation, la réunion d'une section de l'excroissance, section selon un plan perpendiculaire à l'axe commun des logements et de la section, selon le même plan, de la tige s'inscrit dans la section de l'évidement axial.

Dans des modes de réalisation, la pièce de guidage et de blocage est monocorps.

Du fait que la pièce peut être monocorps, sa fabrication est aisée, par exemple par moulage ou découpe avec une matière uniforme, par exemple en matière plastique rigide, en métal ou en bois.

Dans des modes de réalisation, l'évidement axial du tube est cylindrique à directrice circulaire et la plus grande dimension de la section est inférieure au diamètre de la directrice.

Dans des modes de réalisation, l'excroissance est configurée pour pénétrer dans le tube entre la surface intérieure du tube et la surface extérieure du piston.

Grâce à ces dispositions, le vérin peut être bloqué dans toute position respective du tube et du piston, l'excroissance formant un coin entre le tube et le piston. Ces modes de réalisation ont aussi l'avantage de pouvoir être utilisés avec des vérins ne comportant pas de tige intérieure.

Selon un second aspect, la présente invention vise un vérin comportant un piston et un tube comportant un évidement axial dans lequel le piston peut coulisser, qui comporte une pièce de blocage et de guidage selon la présente invention, configurée pour ledit piston et ledit tube.

Les avantages, buts et caractéristiques particulières de ce vérin étant similaires à ceux de la pièce de guidage et de blocage, ils ne sont pas rappelés ici.

### BRÈVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels :
La figure 1 représente, en coupe verticale, un mode de réalisation particulier du vérin et de la pièce de guidage et de blocage objets de l'invention,
La figure 2 représente, en coupe verticale, le vérin illustré en figure 1 après désemboîtement du tube et de la pièce de guidage et de blocage objets de l'invention,
La figure 3 représente, en coupe verticale, le vérin illustré en figures 1 et 2 après décalage de l'axe du piston par rapport à l'axe du tube,
La figure 4 représente, en coupe verticale, le vérin illustré en figures 1 à 3 après insertion de l'excroissance de la pièce de guidage et de blocage dans le tube,
La figure 5 représente, en coupe verticale, la pièce de guidage et de blocage illustrée en figures 1 à 4,
La figure 6 représente, en vue de dessous, une section la pièce illustrée en figures 1 à 5 et d'une tige du vérin, lorsque le vérin n'est pas bloqué,
La figure 7 représente, en vue de dessous, une section A - A, la pièce illustrée en figures 1 à 5 et d'une tige du vérin, lorsque le vérin est bloqué par cette pièce,
La figure 8 représente, en vue en coupe longitudinale, un dispositif de blocage de vérin de l'art antérieur,
La figure 9 représente une pièce particulière du dispositif illustré en figure 8 et
La figure 10 représente, en section axiale et en section transversale B - B, un autre mode de réalisation de la pièce objet de l'invention.

### DESCRIPTION DES MODES DE RÉALISATION

La présente description est donnée à titre non limitatif, chaque caractéristique d'un mode de réalisation pouvant être combinée à toute autre caractéristique de tout autre mode de réalisation de manière avantageuse.

On note que les figures sont à l'échelle.

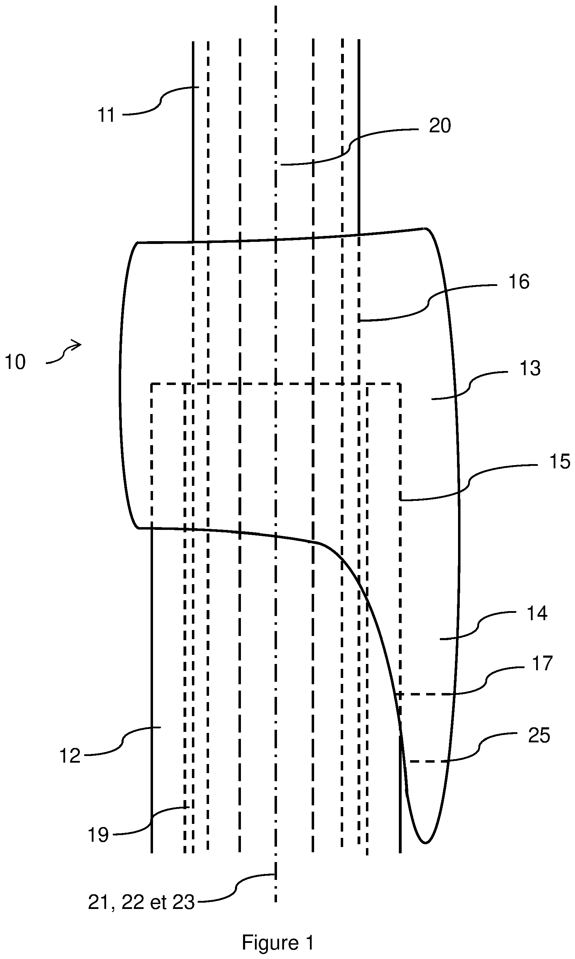

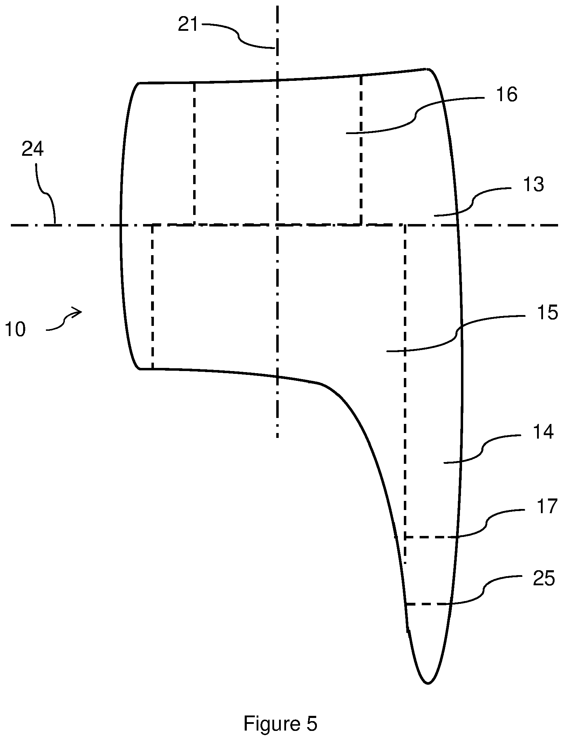

On observe, en figures 1 à 4, un vérin à gaz comportant un piston 11, d'axe 21, et un tube 12, d'axe 23, comportant un évidement axial 19 dans lequel le piston 11 peut coulisser. Le piston 11 et le tube 12 sont, par exemple, en métal, notamment en aluminium. Dans le mode de réalisation représenté en figures 1 à 7, le piston 11 est creux et comporte, en son intérieur, un ressort (non représenté) sur lequel appuie une extrémité (en haut en figures 1 à 5) d'une tige 20, d'axe 22, dont l'autre extrémité appuie sur le fond de l'évidement axial 19. En variante, c'est l'évidement axial 19 qui comporte, en son intérieur, un ressort sur lequel appuie une extrémité de la tige 20 dont l'autre extrémité appuie sur le fond du piston 11.

Dans le mode de réalisation représenté en figures 1 à 7, une pièce 10 de guidage et de blocage du vérin comporte, dans un corps 13 :
- logement 15 d'accueil du tube 12 configuré pour recevoir, en son intérieur, une extrémité du tube 12 en coulissement libre pour sortir du logement et
- un logement 16 d'accueil du piston 11, coaxial avec le logement 15 du tube 12 et dans le prolongement du logement 15 du tube 12, configuré pour recevoir, en son intérieur, le piston 11 en translation libre le long de l'axe commun 21 aux logements 15 et 16.

Le corps 13 comporte, de plus, du côté du logement 15 d'accueil du tube 12, par rapport à un plan 24 perpendiculaire à l'axe 21 commun aux logements 15 et 16 et passant par le fond du logement 15 d'accueil du tube 12, une excroissance 14 s'étendant au-delà du logement 15 d'accueil de tube 12, configurée pour pénétrer à l'intérieur du tube 12.

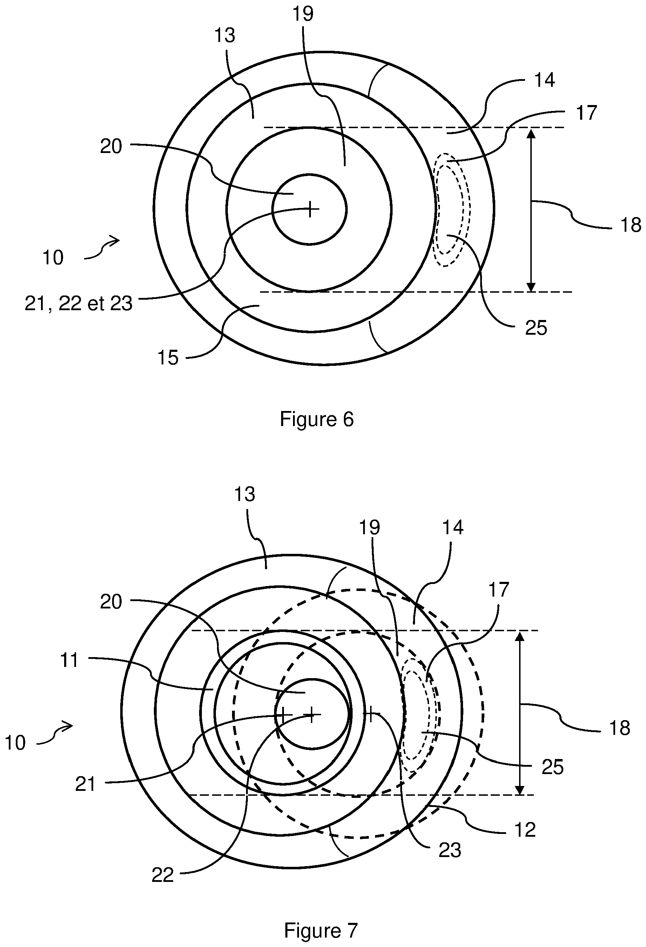

Cette excroissance 14 présente une section 17 (représentée en figure 6) perpendiculaire à l'axe des logements 15 et 16 qui s'inscrit, au sens géométrique, dans l'évidement axial 19 du tube 12 du piston, comme illustré en figure 6. Une section 25 plus éloignée du plan 24 et plus petite que la section 17, puisque la section de l'excroissance 14 est décroissante en s'éloignant du plan 24, au moins à partir de la section 17, pénètre donc dans l'évidement axial 19 du tube 12.

Comme on l'observe dans la vue de dessous de la pièce 10 représentée en figure 6, dans le cas où l'évidement axial 19 est cylindrique à directrice circulaire, la plus grande dimension de la section 17 (verticale en figure 6) est inférieure au diamètre 18 de la directrice circulaire de l'évidement axial 19.

Le corps 13, préférentiellement monocorps en une seule pièce de matière uniforme, est de fabrication aisée, par exemple par moulage ou découpe avec utilisation d'une matière uniforme, par exemple en matière plastique rigide, en métal ou en bois.

Lorsque, comme illustré en figure 1, les logements 15 et 16 reçoivent le tube 12 et le piston 11, respectivement, la pièce 10 assure le guidage du piston 11 dans le tube 12. Ce guidage rigide limite les risques de flambage du piston.

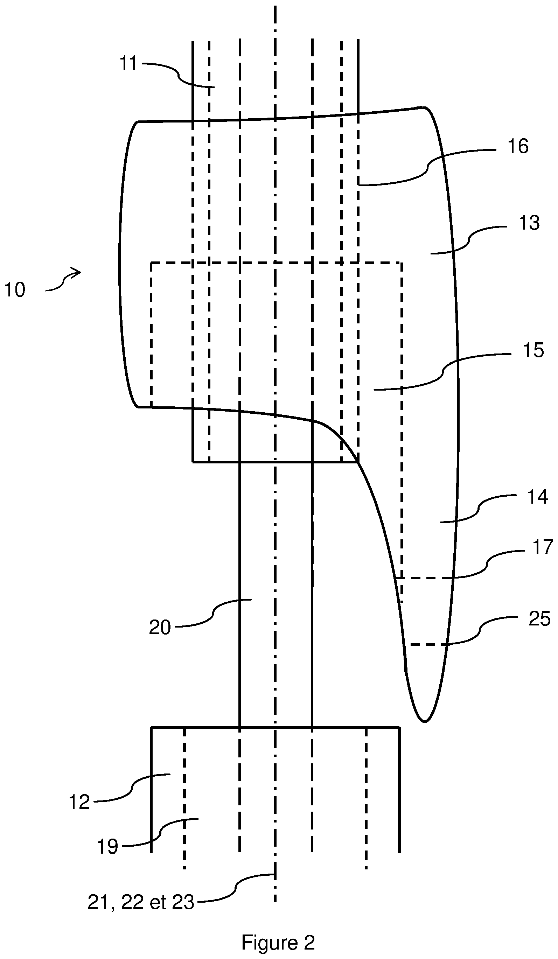

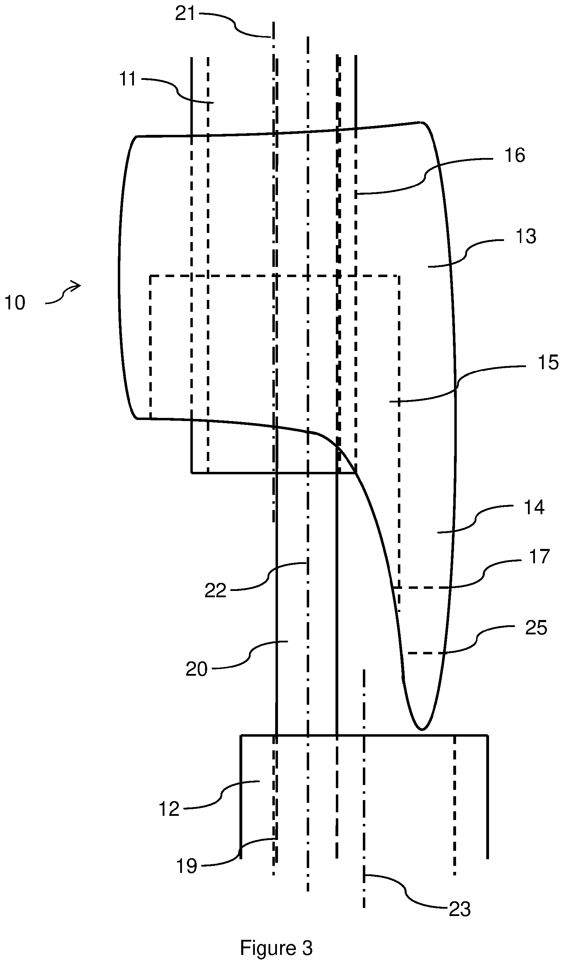

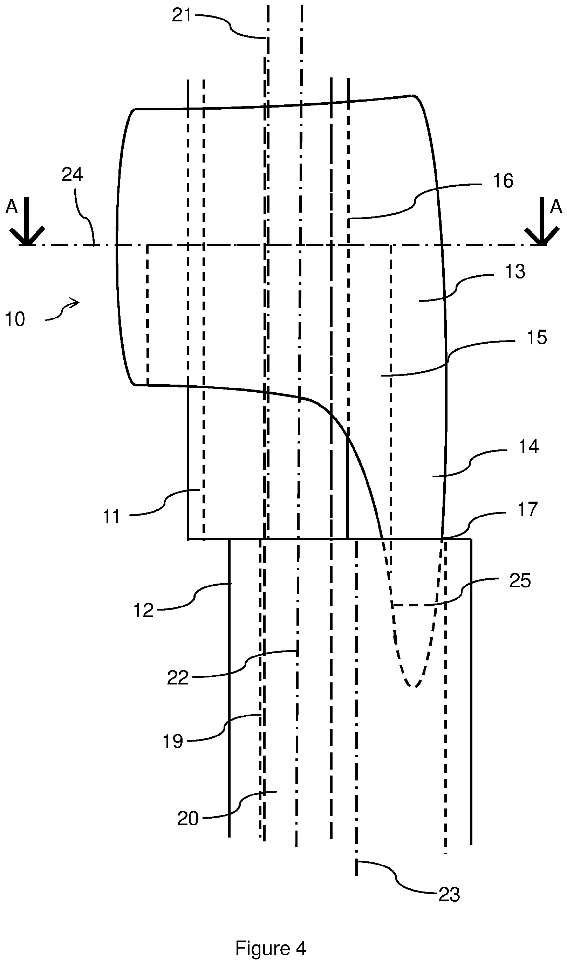

Pour bloquer le vérin en configuration déployée, partant de la configuration représentée en figure 1, l'utilisateur déboîte la pièce 10 du tube 12, comme illustré en figure 2, puis décale latéralement la pièce 10 pour que l'excroissance 14 se trouve en regard de l'évidement 19, comme illustré en figure 3. Enfin, l'utilisateur insère l'excroissance 14 dans l'évidement 19, comme illustré en figure 4. Comme on l'observe en figure 4, le piston 11 se trouve alors en appui sur le bord du tube 12 et ne peut s'en écarter ni vers l'extérieur du tube 12, ni vers l'intérieur du tube 12 du fait que la pièce 10 est retenue en position dans l'évidement 19 et que la pièce 10 retient en position l'extrémité du vérin 11 représentée dans les figures 1 à 4. De plus, la tige 20 assure le maintien sensiblement parallèles des axes du piston 11 et du tube 12, ce qui évite un flambage du vérin 10. Dans cette configuration, le vérin ne peut pas se rétracter, même sous l'effet d'une force exercée sur le piston 11 en direction du tube 12. Le confort et la sécurité de l'utilisateur s'en trouvent augmentés.

Comme illustré en figures 4 et 7 (section A - A illustrée en figure 4), dans ce mode de réalisation et pour le type de vérin comportant une tige 20 en appui sur un ressort, l'excroissance 14 est configurée pour pénétrer dans le tube 12 à côté de la tige 20. L'excroissance 14 est ainsi configurée pour, une fois qu'elle pénètre dans le tube 12, elle décale l'axe 23 du tube 12 par rapport à l'axe 22 de la tige 20 et par rapport à l'axe 21 du piston 11. Dans le cas où la tige 20 peut pivoter dans le vérin 11, l'excroissance 14 est configurée pour, une fois qu'elle pénètre dans le tube 12, décaler l'axe 22 de la tige 20 par rapport à l'axe 21 du piston 11, come illustré en figures 4 et 7. L'excroissance 14 prend alors, à la fois, appui sur le bord interne de l'évidement axial 19 du tube 12 et sur la surface externe de la tige 20. Ainsi, la tige 20 est en appui sur le bord interne du tube 12 et sur le bord intérieur du piston 11. Comme on l'observe en figure 7, la réunion :
- d'une section 17 de l'excroissance 14, section selon un plan perpendiculaire à l'axe commun 21 des logements et
- de la section, selon le même plan, de la tige 20
s'inscrit dans la section de l'évidement axial 19.

En d'autres termes, la section, ici un cercle, de l'évidement axial 19 peut comporter, simultanément et côte à côte, la section 17 de l'excroissance 14 et la section, ici un cercle, de la tige 20. Préférentiellement, une fois l'excroissance 14 introduite dans l'évidement axial 19 du tube 12, la section 17 de l'excroissance 14 prend, à la fois, appui sur le bord interne de l'évidement axial 19 et sur la tige 20. Et, préférentiellement, la tige 20 est en appui sur le bord interne de l'évidement axial 19 et sur le bord intérieur du piston 11. Cette configuration est illustrée en figure 7.

Dans ces modes de réalisation, l'excroissance 14 est configurée pour que, une fois l'excroissance introduite dans l'évidement axial 19 du tube 12, la section 17 de l'excroissance prend, à la fois, appui sur le bord interne de l'évidement axial et sur la tige. De plus, l'excroissance 14 est configurée pour que, une fois l'excroissance introduite dans l'évidement axial 19 du tube 12, la tige 20 soit en appui sur le bord interne de l'évidement axial 19 du tube 12 et sur le bord intérieur du piston 11.

Ces caractéristiques évitent tout mouvement relatif perpendiculaire à leurs axes, du piston 11 et du tube 12, leur jeu et leur usure, et limite les risques de flambage du vérin.

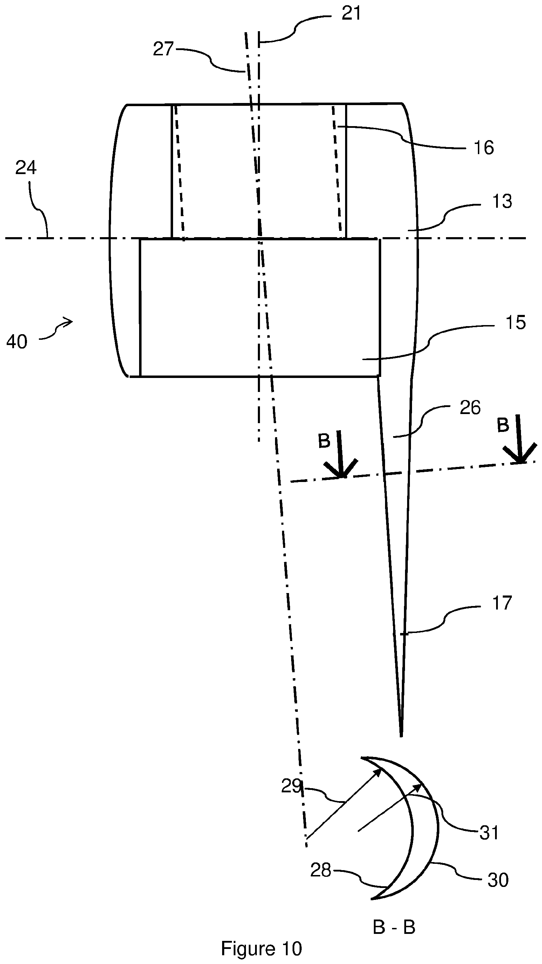

Dans des modes de réalisation représenté en figure 10, l'excroissance 26 de la pièce 40 de guidage et de blocage présente une section configurée pour s'insérer dans le jeu entre le piston 11 et le tube 12. Par exemple cette excroissance 26 présente une forme réalisée entre :
- une surface cylindrique 28 intérieure à directrice circulaire de diamètre 29 égal au diamètre extérieur du piston 11 et
- une surface conique 30 extérieure à directrice circulaire de diamètre 31 inférieur au diamètre 29, dont le centre est décalé par rapport au centre du cercle directeur de la surface cylindrique, surface conique dont le sommet est sur l'axe de la surface cylindrique.

Dans ces modes de réalisation, un jeu est laissé dans le logement 16 du piston 11 pour que l'axe de ce logement 16 puisse se désaxer, comme illustré par l'axe 27, pour permettre l'insertion de l'excroissance dans le jeu entre le piston 11 et le tube 12. La position du vérin 11 parallèlement à l'axe 27 dans le logement 16 est représentée, en figure 10, en traits discontinus. Ces modes de réalisation ont l'avantage de permettre le blocage du vérin dans toute position respective du piston 11 et du tube 12, l'excroissance 26 tenant le rôle de coin entre les eux. Ces modes de réalisation ont aussi l'avantage de pouvoir être utilisés avec des vérins ne comportant pas de tige intérieure.

La présente invention vise aussi le vérin comportant le piston 11, le tube 12 comportant un évidement axial 19 dans lequel le piston 11 peut coulisser, et, éventuellement, la tige 20, et une pièce 10 de blocage et de guidage objet de l'invention, la pièce 10 de blocage et de guidage étant configurée pour ledit piston et ledit tube, et éventuellement ladite tige.

L'invention trouve son application dans toutes les applications des vérins à gaz, aussi appelés ressorts à gaz, par exemple pour l'ouverture ou la fermeture de portes, de coffres à bagages, de capots, de hayons, de tentes. L'invention peut être utilisée soit en cas de défaillance du ressort à gaz, soit en cas de survenance de forces gênantes, par exemple dues au vent ou de forces supplémentaires, par exemple suspension d'un hamac pour bébé ou jeune enfant dans une tente.

On note que la mise en oeuvre de l'invention est particulièrement simple. La pièce de guidage et de blocage objet de l'invention peut s'adapter à tout vérin préexistant dont on connaît les dimensions intérieur et extérieur du tube et les dimensions extérieures du piston et, éventuellement, extérieures d'une tige interne au piston. Pour les vérins les plus utilisés, dont les tubes et pistons et éventuelle tige interne au piston, sont cylindriques à directrices circulaires, la connaissance des diamètres intérieur et extérieur du tube et du diamètre extérieur du piston et, éventuellement, extérieures d'une tige interne au piston, suffisent à la détermination des dimensions de la pièce objet de l'invention.

## Revendications

1. Pièce (10, 40) de guidage et de blocage d'un vérin à gaz et/ou à ressort prédéterminé comportant un piston (11) et un tube (12) comportant un évidement axial (19) dans lequel le piston peut coulisser, pièce qui comporte, dans un corps (13) :
- un logement (15) d'accueil du tube configuré pour recevoir, en son intérieur, une extrémité du tube en coulissement libre pour sortir du logement et
- un logement (16) d'accueil du piston, coaxial avec le logement du tube et dans le prolongement du logement du tube, configuré pour recevoir, en son intérieur, le piston en translation libre le long de l'axe commun (21) aux logements ;
**caractérisée en ce qu'**elle comporte, de plus
- du côté du logement d'accueil du tube, par rapport à un plan (24) perpendiculaire à l'axe (21) des logements et passant par le fond du logement d'accueil du tube, une excroissance (14, 26) s'étendant au-delà du logement d'accueil de tube, configurée pour pénétrer à l'intérieur du tube.

2. Pièce (10, 40) selon la revendication 1, dans laquelle l'excroissance (14, 26) présente une section (17) perpendiculaire à l'axe (21) des logements, qui s'inscrit, au sens géométrique, dans l'évidement axial (19) du tube (12) du vérin.

3. Pièce (10) selon l'une des revendications 1 ou 2, le vérin comportant une tige (20) en appui sur un ressort, dans laquelle l'excroissance (14) est configurée pour pénétrer dans le tube (12) à côté de la tige.

4. Pièce (10) selon la revendication 3, dans laquelle l'excroissance (14) est configurée pour, une fois qu'elle pénètre dans le tube (12), décaler l'axe (23) du tube par rapport à l'axe (22) de la tige (20) et par rapport à l'axe (21) du piston (11).

5. Pièce (10) selon l'une des revendications 3 ou 4, dans laquelle l'excroissance (14) est configurée pour, une fois qu'elle pénètre dans le tube (12), décaler l'axe (22) de la tige (20) par rapport à l'axe (21) du piston (11).

6. Pièce (10) selon l'une des revendications 3 à 5, dans laquelle l'excroissance (14) est configurée pour que, une fois l'excroissance pénétrant dans le tube (12), l'excroissance prend, à la fois, appui sur le bord interne de l'évidement axial (19) du tube et sur la tige (20).

7. Pièce (10) selon l'une des revendications 3 à 6, dans laquelle l'excroissance (14) est configurée pour que, une fois l'excroissance pénétrant dans le tube (12), la tige (20) soit en appui sur le bord interne du tube et sur le bord intérieur du piston (11).

8. Pièce (10) selon l'une des revendications 3 à 7, dans laquelle la réunion :
- d'une section (17) de l'excroissance (14), section selon un plan perpendiculaire à l'axe commun (21) des logements et
- de la section, selon le même plan, de la tige (20)
s'inscrit dans la section de l'évidement axial (19).

9. Pièce (10, 40) selon l'une des revendications 1 à 8, qui est monocorps.

10. Pièce (10, 40) selon l'une des revendications 1 à 9, dans laquelle l'évidement axial (19) du tube (12) est cylindrique à directrice circulaire, la plus grande dimension de la section (17) de l'excroissance est inférieure au diamètre (18) de ladite directrice.

11. Pièce (40) selon l'une des revendications 1 à 10, dans laquelle l'excroissance (26) est configurée pour pénétrer dans le tube (12) entre la surface intérieure du tube et la surface extérieure du piston (11).

12. Vérin (10, 11, 12) comportant un piston (11) et un tube (12) comportant un évidement axial (19) dans lequel le piston peut coulisser, **caractérisé en ce qu'**il comporte une pièce de blocage et de guidage (10, 40) selon l'une des revendications 1 à 11, configurée pour ledit piston et ledit tube.

## Patentansprüche

1. Teil (10, 40) zur Führung und Sicherung einer vorbestimmten Gasdruckfeder und/oder Feder, bestehend aus einem Kolben (11) und einem Rohr (12) mit einer axialen Aussparung (19), in welcher der Kolben gleiten kann, ein Teil, das in einem Körper (13) Folgendes umfasst:
- eine Aufnahme (15) für das Rohr, die so konfiguriert ist, dass sie im Inneren ein Ende des Rohrs aufnehmen kann, das frei verschiebbar ist, um aus der Aufnahme herauszukommen, und
- eine Aufnahme (16) für den Kolben, koaxial zur Rohraufnahme und in der Verlängerung der Rohraufnahme, die so konfiguriert ist, dass im Inneren der Kolben aufgenommen wird, der sich entlang der gemeinsamen Achse (21) der Aufnahmen frei bewegt;
**dadurch gekennzeichnet, dass** sie zusätzlich
- auf der Seite der Rohraufnahme, in Bezug auf eine Ebene (24), die senkrecht zur Achse (21) der Aufnahmen verläuft und den Boden der Rohraufnahme durchquert, einen Vorsprung (14, 26) umfasst, der über die Rohraufnahme hinausgeht und so konfiguriert ist, dass er in das Rohrinnere eindringt.

2. Teil (10, 40) nach Anspruch 1, in welchem der Vorsprung (14, 26) einen Abschnitt (17) senkrecht zur Achse (21) der Aufnahmen aufweist, der sich geometrisch in der axialen Aussparung (19) des Zylinderrohrs (12) befindet.

3. Teil (10) nach einem der Ansprüche 1 oder 2, wobei der Zylinder eine auf einer Feder aufliegende Stange (20) aufweist, in welcher der Vorsprung (14) so konfiguriert ist, dass er in das Rohr (12) neben der Stange eindringt.

4. Teil (10) nach Anspruch 3, wobei der Vorsprung (14) so konfiguriert ist, dass er, sobald er in das Rohr (12) eindringt, die Achse (23) des Rohrs in Bezug auf die Achse (22) der Stange (20) und in Bezug auf die Achse (21) des Kolbens (11) versetzt.

5. Teil (10) nach einem der Ansprüche 3 oder 4, wobei der Vorsprung (14) so konfiguriert ist, dass er, sobald er in das Rohr (12) eindringt, die Achse (22) der Stange (20) in Bezug auf die Achse (21) des Kolbens (11) versetzt.

6. Teil (10) nach einem der Ansprüche 3 bis 5, wobei der Vorsprung (14) so konfiguriert ist, dass er, sobald er in das Rohr (12) eindringt, sowohl am Innenrand der axialen Aussparung (19) des Rohrs als auch an der Stange (20) anliegt.

7. Teil (10) nach einem der Ansprüche 3 bis 6, wobei der Vorsprung (14) so konfiguriert ist, dass, sobald der Vorsprung in das Rohr (12) eindringt, die Stange (20) am Innenrand des Rohrs und am Innenrand des Kolbens (11) anliegt.

8. Teil (10) nach einem der Ansprüche 3 bis 7, wobei sich die Zusammenführung:
- eines Abschnitts (17) des Vorsprungs (14), Abschnitt in einer senkrecht zur gemeinsamen Achse (21) der Aufnahmen stehenden Ebene, und
- des Abschnitts der Stange (20) in derselben Ebene
im Abschnitt der axialen Aussparung (19) befindet.

9. Teil (10, 40) nach einem der Ansprüche 1 bis 8, das einteilig ist.

10. Teil (10, 40) nach einem der Ansprüche 1 bis 9, wobei die axiale Aussparung (19) des Rohrs (12) zylindrisch mit kreisförmiger Führung ist und wobei das größte Maß des Abschnitts (17) des Vorsprungs kleiner ist als der Durchmesser (18) besagter Führung.

11. Teil (40) nach einem der Ansprüche 1 bis 10, wobei der Vorsprung (26) so konfiguriert ist, dass er zwischen der Rohrinnenfläche und der Außenfläche des Kolbens (11) in das Rohr (12) eindringt.

12. Zylinder (10, 11, 12) mit einem Kolben (11) und einem Rohr (12), welches eine axiale Aussparung (19) aufweist, in welcher der Kolben gleiten kann, wobei der Zylinder **dadurch gekennzeichnet ist, dass** er ein Sperr- und Führungsteil (10, 40) nach einem der Ansprüche 1 bis 11 aufweist, das für diesen Kolben und dieses Rohr konfiguriert ist.

## Claims

1. Part (10, 40) for guiding and locking a predefined gas- and/or spring-operated cylinder comprising a piston (11) and a tube (12) comprising an axial recess (19) wherein the piston can slide, this part comprising, in a casing (13):
- a mounting receptacle (15) for the tube, configured to receive, in its interior, an extremity of the tube in free movement for exiting from the receptacle; and
- a mounting receptacle (16) for the piston, coaxial with the receptacle for the tube and in the extension of the receptacle for the tube, configured to receive, in its interior, the piston in free translation along the common axis (21) of the receptacles; **characterised in that** it also comprises
- on the side with the mounting receptacle for the tube, relative to a plane (24) perpendicular to the axis (21) of the receptacles and passing by the bottom of the mounting receptacle for the tube, a projection (14, 26) extending beyond the mounting receptacle for the tube, configured to penetrate to the inside of the tube.

2. Part (10, 40) according to claim 1, wherein the projection (14, 26) has a cross-section (17) perpendicular to the axis (21) of the receptacles, which occurs, geometrically, in the axial recess (19) of the tube (12) of the cylinder.

3. Part (10) according to according to one of claims 1 or 2, the cylinder comprising a rod (20) bearing on a spring, wherein the projection (14) is configured to penetrate into the tube (12) next to the rod.

4. Part (10) according to claim 3, wherein the projection (14) is configured, once it has entered into the tube (12), to shift the axis (23) of the tube relative to the axis (22) of the rod (20) and relative to the axis (21) of the piston (11).

5. Part (10) according to one of claims 3 or 4, wherein the projection (14) is configured, once it has entered into the tube (12), to shift the axis (22) of the rod (20) relative to the axis (21) of the piston (11).

6. Part (10) according to one of claims 3 to 5, wherein the projection (14) is configured such that, once the projection enters into the tube (12), the projection bears on both the internal edge of the axial recess (19) of the tube and on the rod (20).

7. Part (10) according to one of claims 3 to 6, wherein the projection (14) is configured such that, once the projection enters into the tube (12), the rod (20) is resting on the internal edge of the tube and on the interior edge of the piston (11).

8. Part (10) according to one of claims 3 to 7, wherein the meeting of:
- a cross-section (17) of the projection (14), a cross-section along a plane perpendicular to the common axis (21) of the receptacles; and
- the cross-section, along the same plane, of the rod (20)
occurs in the cross-section of the axial recess (19).

9. Part (10, 40) according to one of claims 1 to 8, which is a single-body part.

10. Part (10, 40) according to one of claims 1 to 9, wherein the axial recess (19) of the tube (12) is cylindrical with a circular guide, the largest dimension of the cross-section (17) of the projection is less than the diameter (18) of this guide.

11. Part (40) according to one of claims 1 to 10, wherein the projection (26) is configured to enter into the tube (12) between the inner surface of the tube and the outer surface of the piston (11).

12. Cylinder (10, 11, 12) comprising a piston (11) and a tube (12) comprising an axial recess (19) wherein the piston can slide, **characterised in that** it comprises a locking and guide part (10, 40) according to one of claims 1 to 11, configured for this piston and this tube.
